# EUROPÄISCHE PATENTANMELDUNG

(11) **EP 2 439 475 A1**
(43) Veröffentlichungstag der Anmeldung: **11.04.2012**
(21) Anmeldenummer: 11183534.4
(22) Anmeldetag: 30.09.2011
(51) Int. Cl.: F27B 3/18, F27D 3/00, F27D 3/10, F27D 17/00, C21C 5/52, C21C 5/56

(54) **Chargiervorrichtung**

(30) Priorität: 05.10.2010 DE 102010047516
(71) Anmelder: Fuchs Technology Holding AG, 6010 Kriens (CH)
(72) Erfinder: Fuchs, Gerhard, 77694 Kehl-Bodersweier (DE)
(74) Vertreter: Kramer - Barske - Schmidtchen

(57) **Zusammenfassung**

Bei einer Chargiervorrichtung (1) mit der, sperrige Teile enthaltendes Chargiergut aus einem Schacht (2) durch eine Austrittsöffnung (11) im unteren Bereich einer Schachtwand (4) mittels eines Schiebers (13) schubweise in ein Schmelzgefäß (31) gefördert werden kann, wird bei einer sich anbahnenden Blockierung durch sperrige Teile ein die Austrittsöffnung (11) oben begrenzender Querbalken(26) durch eine von der Vorschubkraft des Schiebers abgeleitete Kraftkomponente angehoben.

## Beschreibung

Durch die US 6,004,504 sind ein Verfahren und eine Vorrichtung zum Steuern einer kontinuierlichen Stahlherstellung im Lichtbogenofen bekannt geworden. Das metallische Chargiergut wird dem Lichtbogenofen durch ein Förderband zugeführt. Ein Chargiergutgeschwindigkeitsdetektor misst die Geschwindigkeit des dem Ofen zugeführten metallischen Chargierguts und ein Chargiergutmassendetektor die Masse des dem Ofen zugeführten metallischen Chargierguts. Ein Rechner bestimmt dann die Fördergeschwindigkeit des Förderbandes, das das Chargiergut in das Ofengefäß transportiert, auf der Grundlage der Geschwindigkeit und der Masse des dem Ofen zugeführten metallischen Chargierguts. Diese Maßnahmen sind vorgesehen, um optimale Schmelzbedingungen sowie eine effiziente Energieausnutzung beim Stahlherstellungsprozess zu erzielen. Die Chargiergutgeschwindigkeit wird mittels Doppler-Geschwindigkeitsmessung bestimmt und die Chargiergutmasse und damit das Gewicht des durch das vibrierende Förderband geförderten Chargierguts durch Bestrahlen und Messen der Absorption durch das Chargiergut. Die Chargiervorrichtung kann auch als Chargiergutvorwärmer ausgebildet sein.

Durch die WO 2006/108691 ist eine Anlage zur Messung und zur Steuerung des Chargierens eines Ofens mit Beschickungsmaterial und Schrottmetall bekannt geworden, die eine automatische Steuervorrichtung zur Steuerung der Beschickung mit Chargiermaterial bzw. Schrott in Abhängigkeit von der dem Bad zugeführten Energie und in Korrelation mit der automatischen Steuervorrichtung eine Messvorrichtung für das zugeführte Chargiermaterial aufweist, welche eine Wiegevorrichtung für das Ofengefäß einschließlich seines Inhalts und anderer Komponenten enthält. Bei einem kippbaren Lichtbogenofen, bei dem sich das Ofengefäß auf einer kippbaren Plattform abstützt, sind zwischen dieser und dem Ofengefäß Sensoren angeordnet, die Messsignale liefern, welche für das Gewicht des Ofengefäßes kennzeichnend sind. Durch die Erfassung der Gewichtszunahme des Ofengefäßes als Folge von dem Ofengefäß kontinuierlich durch einen Förderer zugeführtem Einsatzmaterial ist es möglich, die Zufuhr des Einsatzmaterials in den Ofen, abhängig von der dem Ofen zugeführten Schmelzenergie, in gewünschter Weise zu steuern. Zu diesem Zweck werden ein Signal, das die dem Ofen zugeführte Energie kennzeichnet und ein das Gewicht des Ofengefäßes kennzeichnendes Signal einem Regler zugeführt, der die Geschwindigkeit des Förderers steuert, beispielsweise so, dass die Temperatur des flüssigen Metalls im Ofen nahe dem für den Einschmelzprozess idealen Wert gehalten wird.

Durch die EP 0 646 758 ist eine Vorrichtung zum Vorheizen und Fördern von Chargiermaterial in ein Ofengefäß bekannt geworden, bei der oberhalb des Ofengefäßes ein schachtförmiger Chargiergutvorwärmer angeordnet ist, aus dem vorerhitztes Chargiermaterial mittels eines Schiebers über einen schrägen Durchlassabschnitt durch eine Öffnung im Ofengefäßdeckel im Wesentlichen kontinuierlich in das Ofengefäß eingebracht werden kann. Die bei jeder hin- und hergehenden Bewegung des Schiebers in das Ofengefäß eingebrachte Menge an Chargiermaterial ist durch Steuern der Geschwindigkeit oder des Hubs des Schiebers einstellbar. Bei einer Ausführungsform ist hinter dem Durchlassabschnitt eine von einer Wiegeeinrichtung getragene Wiegeplatte vorgesehen. Dieser werden über den Durchlassabschnitt Teilmengen des Chargiermaterials zugeführt. Durch die Wiegeeinrichtung wird das Gewicht der zugeführten Teilmengen bestimmt und dann werden die Teilmengen über einen weiteren Schieber durch den Ofendeckel in das Ofengefäß chargiert. Eine waagrechte obere, in der Höhe einstellbare Führungsstange verhindert, dass Material unkontrolliert über die Wiegeplatte in das Ofengefäß fällt und damit gewichtsmäßig nicht erfasst wird.

Die bekannten Anlagen, bei denen das Einsatzmaterial des Lichtbogenofens kontinuierlich oder im Wesentlichen kontinuierlich chargiert wird, wobei zur Optimierung des Schmelzprozesses die Fördergeschwindigkeit der Chargiervorrichtung steuerbar ist, können nur mit einem verhältnismäßig homogenen, kleinstückigen Einsatzmaterial, wie Eisenschwammpellets, Eisenbriketts oder mit sortiertem Stahlschrott betrieben werden.

Die durch die WO 2005/052481 bekannt gewordene Chargiervorrichtung der einleitend genannten Art und der hierdurch bekannt gewordene Chargiergutvorwärmer sehen Maßnahmen vor, Blockierungen beim Chargieren von Chargiergut stark schwankender Größe, zum Beispiel von unsortiertem Schrott, zu verhindern und ermöglichen es dadurch, einem Ofengefäß unsortiertes, sperrige Teile enthaltendes Chargiergut gesteuert zuzuführen, so dass der Einschmelzprozess durch eine gesteuerte Zufuhr des Einsatzmaterials in gewünschter Weise beeinflusst werden kann.

Um beim schubweisen Fördern von Chargiergut an der Austrittsöffnung der Chargiervorrichtung Blockierungen durch sperriges Gut zu verhindern ist die obere Begrenzung der Austrittsöffnung durch eine horizontale, drehbar gelagerte Walze gebildet. Die Walze ist mittels an den Enden angebrachter kurzer Schwenkhebel um eine in der Rahmenkonstruktion an der Vorderseite des Schachtes vorgesehene horizontale Schwenkachse schwenkbar.

Die Walze weist auf ihrer Umfangsfläche verteilte rippenförmige Mitnehmerelemente auf. Beim Austragen von Chargiergut aus dem Schacht mittels des Schiebers verhaken sich die Mitnehmer am transportierten Gut und es wird die sich frei drehende Walze mitgenommen. Hierdurch wird das Gut auch im Bereich der oberen Kante der Austrittsöffnung ohne die Gefahr eines Verklemmens frei ausgetragen, wobei die Walze aufgrund ihrer Schwenkbewegung die durch das transportierte Chargiergut erzwungenen Höhenänderungen ausgleichen kann. Die Walze kann mit einem Antrieb ausgebildet werden um das Material an der oberen Kante der Austrittsöffnung aktiv hinaus zu befördern.

Aufgabe der vorliegenden Erfindung ist es, eine weitere vorteilhafte Ausgestaltung einer Chargiervorrichtung bzw. eines Chargiergutvorwärmers anzugeben, mit der Blockierungen des Materialaustrags an der Austrittsöffnung der Chargiervorrichtung verhindert werden können. Diese Ausgestaltung soll ferner eine konstruktiv einfache Integration in eine Gas-Bypassleitung ermöglichen.

Die Erfindung ist durch die Merkmale des Anspruchs 1 gekennzeichnet. Vorteilhafte Ausgestaltungen der Erfindung sind in den Unteransprüchen angegeben.

Die Erfindung wird durch ein Ausführungsbeispiel anhand von neun Figuren näher erläutert. Es zeigen in schematischer Darstellung
- Fig. 1: eine perspektivische Ansicht einer erfindungsgemäßen, als Chargiergutvorwärmer ausgebildeten Chargiervorrichtung,
- Fig. 2: eine Seitenansicht, teilweise im Schnitt, der an das Gefäß eines Lichtbogenofens angeschlossenen Chargiervorrichtung von Fig. 1,
- Fig. 3: eine perspektivische Ansicht des unteren Teils der Chargiervorrichtung von Fig. 1,
- Fig. 4: in einer der Fig. 1 entsprechenden Darstellung einen Ausschnitt einer modifizierten Chargiervorrichtung,
- Fig. 5: eine Seitenansicht, teilweise im Schnitt, der Chargiervorrichtung von Fig. 4,
- Fig. 6 bis 8: in verschiedenen Ansichten einen Querbalken mit Schwenkhebeln, und
- Fig. 9: eine Querschnittsansicht des Querbalkens in vergrößerter Darstellung.

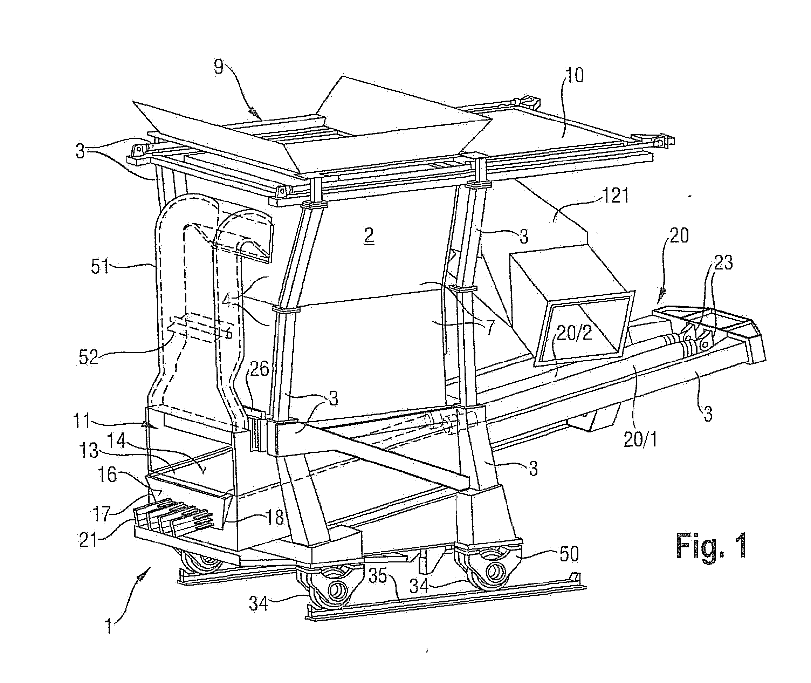

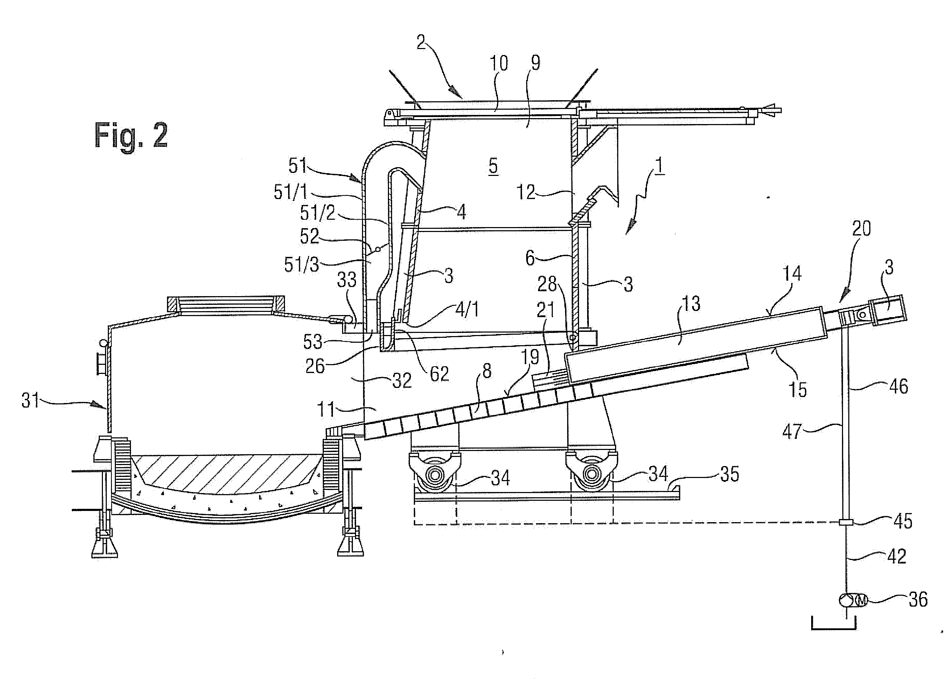

Der in Fig. 1 perspektivisch und in Fig. 2 in einer Seitenansicht, teilweise im Schnitt dargestellte, schachtförmige Chargiergutvorwärmer 1 zum Vorwärmen von in ein Schmelzgefäß 31 zu chargierendem Chargiergut enthält einen Schacht 2 mit in einer Rahmenkonstruktion 3 gehaltenen Schachtwänden 4, 5, 6 und 7, ferner einen unteren Schachtboden 8 und eine obere Eintrittsöffnung 9 für Chargiergut, die durch einen verschiebbaren Deckel 10 verschließbar ist. Im unteren Bereich des Schachtes 2 ist in der, bei der Darstellung nach Fig. 2 linken Schachtwand, die als vordere Schachtwand 4 bezeichnet wird, eine Austrittsöffnung 11 für Chargiergut vorgesehen, die gleichzeitig einen Gaseinlass für ein Heizgas zum Aufheizen von im Schacht befindlichem Chargiergut bildet. Im oberen Bereich des Schachtes 2 ist ein Gasauslass 12 vorhanden. Fig. 1 zeigt einen an diesen Gasauslass angeschlossenen Abgaskrümmer 121.

Der Chargiergutvorwärmer enthält ferner einen Schieber 13. Der Schieber 13 weist eine Oberseite 14, eine Unterseite 15, eine quer zur Verschieberichtung verlaufende Stirnseite 16 und zwei parallel zur Verschieberichtung verlaufende Seitenflächen 17 und 18 auf. Der Schieber 13 ist mit seiner Unterseite 15 auf der Oberseite 19 des Schachtbodens 8 aufliegend, zwischen einer den Schachtboden innerhalb der Schachtwände freigebenden, zurückgezogenen, ersten Position (Fig. 2) und einer in Richtung der Austrittsöffnung 11 vorgeschobenen, zweiten Position (Fig. 1) verschiebbar. Damit der Schieber 13 auch in der zurückgezogenen ersten Position geführt wird, ist der Schachtboden 8 über die bezüglich der Austrittsöffnung 11 hintere Schachtwand 6 hinaus verlängert. In der hinteren Schachtwand 6 ist eine Durchtrittsöffnung 28 für den Schieber 13 vorgesehen, die dem Querschnittsprofil des Schiebers 13 angepasst ist. Das Vor- und Zurückschieben des Schiebers 13 erfolgt durch eine erste Betätigungsvorrichtung 20, die im dargestellten Fall in Form von zwei hydraulischen Linearantrieben 20/1 und 20/2, jeweils aus einem Hubzylinder und einer Hubstange, ausgebildet ist. Die erste Betätigungsvorrichtung 20 ist in der Rahmenkonstruktion 3 um eine horizontale Achse schwenkbar gelagert. Zu diesem Zweck ist jeder der hydraulischen Linearantriebe über horizontale Zapfen einerseits durch Schwenklager 23 mit dem Rahmen 3 und andererseits durch nicht dargestellte Schwenklager mit dem Schieber 13 um horizontale Achsen schwenkbar verbunden. Hierdurch können Verklemmungen oder Blockierungen des Schiebers, die bei dessen Vor- und Rückwärtsbewegung durch in den Führungsbereich gelangendes Einsatzmaterial verursacht werden, vermieden werden.

Die Oberseite 19 des Schachtbodens 8 ist vorzugsweise zur Austrittsöffnung 11 des Schachtes 2 hin abfallend ausgebildet. Ein Neigungswinkel von 15 Grad gegenüber der Waagerechten hat sich als vorteilhaft erwiesen. Der Neigungswinkel sollte nicht größer als 45 Grad sein, weil sonst Chargiergut unkontrolliert die Austrittsöffnung 11 verlassen könnte und dann der Chargiergutaustrag nicht mehr ausreichend genau gesteuert werden kann.

Der Konvergenzwinkel der nach unten konvergierenden Seitenflächen 17, 18 des Schiebers 13 gegenüber der Waagerechten liegt vorzugsweise zwischen 45 Grad und 75 Grad. Als besonders vorteilhaft haben sich etwa 60 Grad erwiesen.

Um beim Austragen von unsortiertem Schrott Blockierung durch sperriges Material an der Austrittsöffnung 11 zu vermeiden, ist als obere Begrenzung der Austrittsöffnung 11 ein hebund senkbarer Querbalken 26 vorgesehen. Durch Anheben des Querbalkens 26 lässt sich die Austragöffnung vergrößern und hierdurch eine Blockierung des Materialaustrags durch sperriges Material vermeiden.

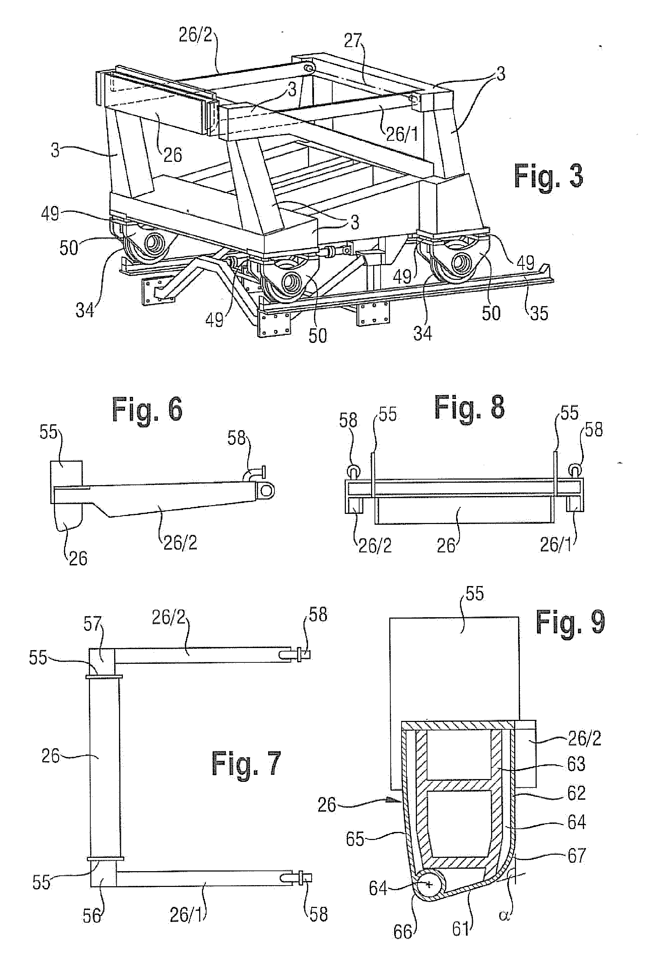

Der Querbalken 26 kann, um beim Anheben und beim Absenken geführt zu werden, mit seinen Enden in vertikale Führungen des Rahmens 3 eingreifen. Bei dem Ausführungsbeispiel sind an den Enden des Querbalkens 26 Schwenkhebel 26/1 und 26/2 angebracht, die um eine feststehende horizontale Achse 27 (siehe Fig. 3) der Rahmenkonstruktion 3 schwenkbar sind. Um beim Heben und Senken des Querbalkens 26 einen möglichst linearen Bewegungsablauf zu erzielen ist die horizontale Schwenkachse 27 der Schwenkhebel 26/1, 26/2 zur Vergrößerung des Schwenkradius an der Hinterseite des Schachtes 2 angeordnet. An der Vorderseite des Schachtes 2 sind in der Rahmenkonstruktion 3 Anschläge zum Abstützen der Schwenkhebel 26/1, 26/2 in der abgesenkten Ausgangslage des Querbalkens 26 vorgesehen. In dieser Position liegen die Schwenkhebel 26/1, 26/2 in einer etwa horizontalen Ebene.

Eine sich beim Austrag von sperrigem Gut anbahnende Blockierung wird durch Anheben des Querbalkens 26 beseitigt. Das auf das Anheben folgende Absenken wird durch die Schwerkraft des Querbalkens 26, gegebenenfalls ergänzt durch eine Federkraft, bewirkt.

Die zum Anheben des Querbalkens 26 erforderliche Kraft wird von der Vorschubkraft des Schiebers 13 abgeleitet. Zu diesem Zweck ist der Querschnitt des Querbalkens 26 so ausgebildet, dass sich bei einer anbahnenden Blockierung des Vorschubs der aus dem Schacht auszutragenden Materialteilmenge von der in diese Teilmenge eingetragenen Vorschubkraft eine senkrechte Kraftkomponente abgeleitet wird, die in der Lage ist, den Querbalken 26 entgegen der Schwerkraft und einer etwaigen Federkraft anzuheben. Eine geeignete Ausgestaltung des Querbalkens 26 wird später anhand der Fig. 6 bis 9 näher beschrieben.

An der Stirnseite 16 des Schiebers 13 sind in Richtung der Vorschubbewegung des Schiebers 13 verlaufende Stoßstangen 21 im Abstand voneinander angeordnet.

Vorzugsweise ist die als Chargiergutvorwärmer ausgebildete Chargiervorrichtung zum Vorwärmen von in ein Schmelzgefäß, insbesondere in das Gefäß eines Lichtbogenofens zu chargierendem Chargiergut bestimmt. Zu diesem Zweck ist es vorteilhaft, wenn die Verbindung zwischen Chargiergutvorwärmer und dem Schmelzgefäß schnell gelöst werden kann, damit beim Kippen des Gefäßes der Chargiergutvorwärmer nicht mitgekippt werden muss. Andererseits soll das heiße Abgas des Lichtbogenofens ohne wesentliche Verluste durch die Austrittsöffnung 11 für das Chargiergut, die als Gaseinlass dient, in den Schacht 2 eingeleitet und nach Durchströmen des zu erhitzenden Chargiergutes durch den oberen Gasauslass 12 wieder abgeleitet werden können.

In Fig. 2 ist eine bevorzugte Verbindung zwischen dem Chargiergutvorwärmer 1 und einem kippbaren Gefäß 31 eines Lichtbogenofens dargestellt. Der obere, üblicherweise aus wassergekühlten Wandelementen bestehende Teil des Gefäßes 31 ist mit einer rechteckigen Eintrittsöffnung 32 für Chargiergut versehen. Vorzugsweise ist das Gefäß 31 in der Draufsicht oval ausgebildet, so dass es einfacher möglich ist, hier eine rechteckförmige Eintrittsöffnung 32 vorzusehen. An der Austrittsöffnung 11 des Chargiergutvorwärmers 1 ist ein, diese umgebender Ansatz 33 zum Anschließen an die als Chargieröffnung dienende Eintrittsöffnung 32 des Schmelzgefäßes vorgesehen. Der Ansatz ist in Form einer Muffe ausgebildet, deren Außenkontur zum Einsetzen in die Chargieröffnung 32 an deren Innenkontur angepasst ist. Außerdem ist der Chargiergutvorwärmer 1 verschiebbar ausgebildet. Zu diesem Zweck ist bei dem Ausführungsbeispiel der Rahmen 3 mittels Rollen 34 auf Schienen 35 horizontal, in einer Richtung quer zur Kipprichtung des Schmelzgefäßes 31 verfahrbar ausgebildet. Vor dem Kippen des Schmelzgefäßes 31 zum Abstechen einer Schmelze wird die Verbindung zwischen der Muffe 33 und der Chargieröffnung 32 durch Verfahren des Chargiergutvorwärmers 1, bei der Darstellung von Fig. 2 nach rechts, gelöst.

Durch Vorschieben des Schiebers 13 werden jeweils Chargiergutteilmengen, die bei unsortiertem Schrott stark schwanken können, durch die Austrittsöffnung 11 des Schachtes 2 und durch die Eintrittsöffnung 32 des Ofengefäßes 31 in dieses gefördert. Die pro Zeiteinheit geförderte Menge an Einsatzmaterial lässt sich sowohl durch die Häufigkeit bzw. die Taktfolge der Vorschubbewegungen wie auch durch den Geschwindigkeitsverlauf der einzelnen Vorschubbewegungen, das heißt durch den Geschwindigkeitsverlauf der Vorwärts- und/oder der Rückwärtsbewegungen des Schiebers13 steuern. Zu diesem Zweck ist eine Steuereinheit 45 vorgesehen, die den Fluss der Hydraulikflüssigkeit in den Hydraulikleitungen 46 und 47 zu den hydraulischen Linearantrieben 20/1 bzw. 20/2 synchron entsprechend steuert. Bei dem dargestellten Ausführungsbeispiel wird der Geschwindigkeitsverlauf der Vorwärts- bzw. der Rückwärtsbewegungen des Schiebers13 durch die Steuereinheit 45 in Abhängigkeit von dem Gewicht der dem Ofengefäß schubweise zugeführten Chargiergutteilmengen gesteuert. Das Gewicht der bei einer Vorschubbewegung des Schiebers 13 in das Ofengefäß geförderten Chargiergutteilmenge wird hierbei jeweils durch den Gewichtsverlust der im Schacht befindlichen Gesamtmenge an Chargiergut mittels einer hierfür ausgelegten Wiegevorrichtung erfasst. Zu diesem Zweck sind bei dem beschriebenen Ausführungsbeispiel zwischen dem, den Schacht 2 tragenden Rahmen 3 und dessen Auflage auf Fahrgestellen 50 der Räder 34 Wägezellen 49 angeordnet (siehe Fig.3). Diese liefern an die Steuereinheit 45 ein durch diese verarbeitbares Messsignal, das für eine Gewichtsveränderung des Schachtes 2 kennzeichnend ist. Bei dem Ausführungsbeispiel sind an jedem der vier Fahrgestelle Wägezellen 49 vorgesehen.

Durch diese Maßnahme ist es möglich, das Gewicht der beim Vorschieben des Schiebers 13 in das Ofengefäß chargierten Teilmengen zu bestimmen und falls diese nicht dem Sollwert entsprechen, durch Verändern der Taktfrequenz oder der Geschwindigkeit des Schiebers bei der Vorschubbewegung des Schiebers auszugleichen. Auf diese Weise lassen sich auch starke Gewichtsschwankungen des beim Vorschub des Schiebers eingebrachten Einsatzmaterials, wie sie bei unsortiertem Schrott vorkommen können, durch die Steuereinheit 45 auf den vorgegebenen Sollwert regeln.

Im Hinblick auf eine Optimierung des Einschmelzprozesses bestimmt sich die dem Ofengefäß pro Zeiteinheit zuzuführende Gewichtsmenge und somit der Sollwert für die zweite Steuereinheit 45 durch die Einschmelzleistung des Schmelzofens und die Temperatur des im Chargiergutvorwärmer vorgewärmten Materials. Diese Größen werden bei der Vorgabe des Sollwerts für die Steuereinheit als Führungsgröße berücksichtigt.

Je nach Zusammensetzung des Einsatzmaterials, beispielsweise wenn dieses Leichtschrott, wie Späne, enthält, kann es im Schacht 2 bereits zum Aufschmelzen und Zusammenbacken von Einsatzmaterial kommen. Hierdurch könnte der gesteuerte Austrag des Chargierguts aus dem Chargiergutvorwärmer und auch der Mechanismus der bei sich anbahnender Blockierung des Materialaustrags den Querbalken anhebt, gestört werden. Um diese Störungen zu verhindern, ist bei der dargestellten Ausführungsform eine Gas-Bypassleitung 51 mit einer Klappe 52 vorgesehen, durch die bei Gefahr einer zu starken Erhitzung des Einsatzmaterials im Schacht 2 wenigstens ein Teil des im Schmelzgefäß erzeugten heißen Abgases am Schacht 2 des Chargiergutvorwärmers 1 vorbei in dessen oberen Bereich zum Gasauslass 12 geleitet werden kann. Die Steuerung der Klappe 52 kann mittels geeignet, beispielsweise im Bereich des Abgaskrümmers 121 angebrachter Temperatursensoren automatisiert werden. Ein Aufschmelzen und Zusammenbacken von Einsatzmaterial, das eine Veränderung des Strömungswiderstandes durch den Schacht 2 zur Folge hat, kann auch durch Drucksensoren erfasst werden, die im Strömungsweg des Abgases, vorzugsweise hinter dem Gasauslass 12, angeordnet sind und ein Signal zur Steuerung der Klappe 52 liefern.

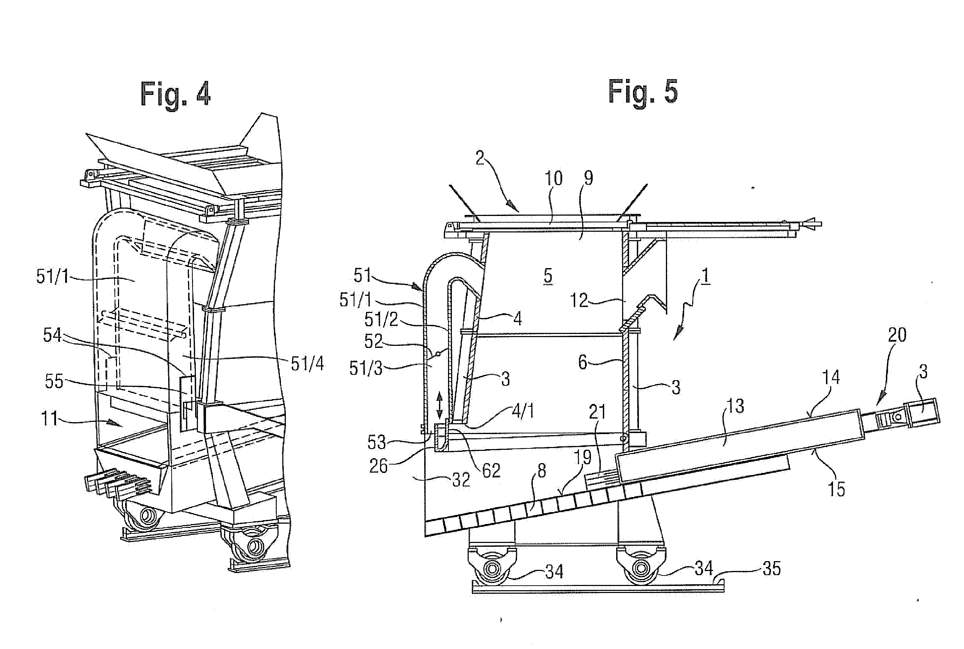

Die Gaseintrittsöffnung 53 der Gas-Bypassleitung 51 ist benachbart zur Unterkante 4/1 der vorderen Schachtwand 4 außerhalb der Austrittsöffnung 11 für Chargiergut angeordnet (vgl. Fig. 2 und 5). Bei dem in den Fig. 1 und 2 dargestellten Ausführungsbeispiel ist der Querbalken 26 in seiner abgesenkten Ausgangslage zwischen der Gaseintrittsöffnung 53 der Gas-Bypassleitung 51 und der vorderen Schachtwand 4 angeordnet. Bei dem in den Fig. 4 und 5 dargestellten Ausführungsbeispiel ist der Querbalken 26 in seiner abgesenkten Ausgangslage im Bereich innerhalb der Gaseintrittsöffnung 53 der Gas-Bypassleitung 51 angeordnet. Hierdurch kann der sonst für die Hubbewegung des Querbalkens 26 erforderliche Spalt zwischen der vorderen Schachtwand 4 und der Gas-Bypassleitung 51, durch den Heizgas austreten kann, vermieden werden.

Die Gas-Bypassleitung 51 ist als flaches Gasrohr mit Breitseiten 51/1, 51/2 und Schmalseiten 51/3, 51/4 ausgebildet. Bei dem in den Fig. 4 und 5 dargestellten Ausführungsbeispiel sind die mit den Schwenkhebeln 26/1 und 26/2 verbundenen Enden des Querbalkens 26 durch schlitzförmige Aussparungen 54 in den Schmalseiten 51/3 und 51/4 der Gas-Bypassleitung 51 hindurchgeführt. Die schlitzförmigen Aussparungen 54 sind vorgesehen, um die Hubbewegung des Querbalkens 26 zur Beseitigung von Blockierungen zu ermöglichen. Sie sind bei dem Ausführungsbeispiel durch am Querbalken 26 angebrachte Abdeckbleche 55 (siehe Fig. 5 bis 9) von außen abdeckbar, um den Gasaustritt an den schlitzförmigen Aussparungen 54 zu verhindern oder zumindest wesentlich zu reduzieren.

In den Fig. 6 bis 8 ist in verschiedenen Ansichten der an den Schwenkhebeln 26/1 und 26/2 befestigte Querbalken 26 dargestellt. Es ist die bei dem Ausführungsbeispiel nach den Fig. 4 und 5 eingesetzte Ausgestaltung, die die an den Endabschnitten 56 und 57 angebrachten Abdeckbleche zum Abdecken der Schlitze 54 in der Gas-Bypassleitung 51 zeigen. Die Schwenkhebel 26/1 und 26/2 sind mit Kanälen zum Zu- und Ableiten eines Kühlmediums, vorzugsweise Wasser, ausgestattet, das über Anschlüsse 58 zu- bzw. abführbar ist.

Der in Fig. 9 in einer Querschnittsansicht dargestellte Querbalken 26 weist eine untere erste Seitenfläche 61 und eine seitliche zweite Seitenfläche 62 auf. Die zweite Seitenfläche 62 ist, wie die Fig. 2 und 5 zeigen, dem Schachtinneren zugewandt. Um bei einer sich anbahnenden Blockierung des Materialaustrags aus der Austrittsöffnung 11 (vgl. Fig. 1 und 4) einen Teil der durch den Schieber 13 eingebrachten Vorschubkraft zum Anheben des Querbalkens 26 ausnutzen zu können, ist der Übergang von der zweiten Seitenfläche 62 zur ersten Seitenfläche 61 als konvexer Flächenabschnitt 63, vorzugsweise in Form eines im Querschnitt kreisbogenförmigen Hohlzylindersektors ausgebildet. Der Kraftumleitung dient außerdem eine weitere Maßnahme, nämlich eine Ausgestaltung der unteren ersten Seitenfläche 61 so, dass diese in Schubrichtung des Materials abfallend ausgebildet ist. Bei einer solchen Ausgestaltung schließt die erste Seitenfläche 61 mit der zweiten Seitenfläche 62 einen stumpfen Winkel α ein.

Da bei einem Chargiergut-Vorwärmer der Querbalken 26 der Einwirkung der heißen Ofenabgase ausgesetzt ist, ist es zweckmäßig, den Querbalken im thermisch beanspruchten Bereich zu kühlen. Zu diesem Zweck enthält der Querbalken 26 ein Stützgerüst 63 und Kanäle 64 für das Kühlmedium. Die besonders stark beanspruchte Kante zwischen der unteren ersten Seitenfläche 61 und einer anschließenden dritten Seitenfläche 65 ist durch ein Kühlrohr 66 gebildet, das ebenso wie die übrigen Kühlkanäle 64 über die in den Schwenkhebeln 26/1 und 26/2 vorgesehenen Kanäle durch die Anschlüsse 58 an einen Kühlkreislauf anschließbar ist.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Chargiervorrichtung (1) zum Chargieren von Chargiergut in ein Schmelzgefäß, enthaltend
einen Schacht (2), mit
in einer Rahmenkonstruktion (3) gehaltenen Schachtwänden (4, 5, 6, 7), von denen eine an der Vorderseite des Schachtes (2) gelegene vordere Schachtwand (4) im unteren Bereich eine Austrittsöffnung (11) für Chargiergut und eine an der Hinterseite des Schachtes (2) gelegene hintere Schachtwand (6) eine Durchtrittsöffnung für einen Schieber (13) aufweist, ferner mit einem unteren Schachtboden (8), und einer oberen Eintrittsöffnung (9) für Chargiergut,
einen Schieber (13),
der zum schubweisen Fördern von Chargiergutteilmengen aus dem Schacht (2) durch die genannte Austrittsöffnung (11) hindurch mittels einer Betätigungsvorrichtung (20; 20/1 20/2) aus einer, den Schachtboden freigebenden, zurückgezogenen, ersten Position zur genannten Austrittsöffnung (11) hin in eine vorgeschobene, zweite Position vorschiebbar und dann wieder in die erste Position zurückschiebbar ist,
ferner enthaltend ein die genannte Austrittsöffnung (11) oben begrenzendes oberes
Begrenzungsteil, das durch Schwenken mittels an seinen Enden angebrachter Schwenkhebel (26/1, 26/2) um eine in der Rahmenkonstruktion vorgesehene horizontale Schwenkachse (27) heb- und senkbar ist,
**dadurch gekennzeichnet, dass**
das obere Begrenzungsteil als ein mit den Schwenkhebeln (26/1, 26/2) verbundener Querbalken (26) mit einer unteren ersten Seitenfläche (61) und einer dem Schachtinneren zugewandten seitlichen zweiten Seitenfläche (62) ausgebildet ist, der Querbalken (26) vor der vorderen Schachtwand (4) parallel zu dieser heb- und senkbar ist und der Übergang von der zweiten zur ersten Seitenfläche als konvexer Flächenabschnitt (63) ausgebildet ist.

2. Chargiervorrichtung nach Anspruch 1, **dadurch gekennzeichnet, dass** die horizontale Schwenkachse (27) der Schwenkhebel (26/1, 26/2) an der Hinterseite des Schachtes (2) angeordnet ist und an der Vorderseite des Schachtes (2) in der Rahmenkonstruktion (3) Anschläge zum Abstützen der Schwenkhebel (26/1, 26/2) in der abgesenkten Ausgangslage des Querbalkens (26) vorgesehen sind.

3. Chargiervorrichtung nach Anspruch 1 oder 2, **dadurch gekennzeichnet, dass** die erste Seitenfläche (61) des Querbalkens (26) mit der zweiten Seitenfläche (62) einen stumpfen Winkel (α) einschließt.

4. Chargiervorrichtung nach einem der Ansprüche 1 bis 3, **dadurch gekennzeichnet, dass** der Querbalken (26) eine dritte Seitenfläche (65) aufweist, die zur zweiten Seitenfläche (64) parallel verläuft und die Kante zwischen der unteren ersten Seitenfläche (61)und der anschließenden dritten Seitenfläche (65) durch ein Rohr (66) gebildet ist.

5. Chargiervorrichtung nach einem der Ansprüche 1 bis 4, **dadurch gekennzeichnet, dass** der Querbalken (26) ein Stützgerüst (63) und Kanäle (64) für ein Kühlmedium enthält, die über in den Schwenkhebeln (26/1, 26/2) vorgesehene Kanäle (64) an einen Kühlkreislauf anschließbar sind.

6. Chargiervorrichtung nach einem der Ansprüche 1 bis 5, bei der die Austrittsöffnung (11) für Chargiergut als Gaseinlass für ein Heizgas zum Aufheizen von im Schacht befindlichem Chargiergut ausgebildet ist, die obere Eintrittsöffnung (9) für Chargiergut durch einen Deckel (10) verschließbar ist, und im oberen Bereich des Schachtes (2) ein Gasauslass (12) für das Heizgas vorgesehen ist.

7. Chargiervorrichtung nach Anspruch 6, **dadurch gekennzeichnet, dass** parallel zum Strömungsweg des Heizgases durch den Schacht (2) eine Gas-Bypassleitung (51) mit einer steuerbaren Absperrklappe (52) vorgesehen ist.

8. Chargiervorrichtung nach Anspruch 6 oder 7, **dadurch gekennzeichnet, dass** die Gaseintrittsöffnung (53) der Gas-Bypassleitung (51) benachbart zur Unterkante der vorderen Schachtwand (4) außerhalb der Austrittsöffnung (11) für Chargiergut angeordnet ist.

9. Chargiervorrichtung nach einem der Ansprüche 6 bis 8, **dadurch gekennzeichnet, dass** der Querbalken (26) in seiner abgesenkten Ausgangslage zwischen der Gaseintrittsöffnung (53) der Gas-Bypassleitung (51) und der vorderen Schachtwand (4) angeordnet ist.

10. Chargiervorrichtung nach einem der Ansprüche 6 bis 8, **dadurch gekennzeichnet, dass** der Querbalken (26) in seiner abgesenkten Ausgangslage im Bereich innerhalb der Gaseintrittsöffnung (53) der Gas-Bypassleitung (51) angeordnet ist.

11. Chargiervorrichtung nach einem der Ansprüche 6 bis 10, **dadurch gekennzeichnet, dass** die Gas-Bypassleitung als flaches Gasrohr mit parallel zur vorderen Schachtwand (4) an der Vorderseite des Schachtes (2) angeordneten Breitseiten (51/1, 51/2) ausgebildet ist.

12. Chargiervorrichtung nach Anspruch 11, **dadurch gekennzeichnet, dass** die mit den Schwenkhebeln (26/1, 26/2) verbundenen Enden des Querbalkens (26) Endabschnitte (56, 57) aufweisen, die durch schlitzförmige Aussparungen (54) der Gas-Bypassleitung (51) hindurchgeführt sind.

13. Chargiervorrichtung nach Anspruch 12, **dadurch gekennzeichnet, dass** an den Endabschnitten (56, 57) des Querbalkens (26) Abdeckbleche (55) vorgesehen sind, die die schlitzförmigen Aussparungen (54) in den Schmalseiten (51/3, 51/4) der Gas-Bypassleitung (51) wenigstens teilweise abdecken.
